# FASCICULE DE BREVET EUROPEEN

(11) **EP 0 488 872 B1**
(45) Date de publication et mention de la délivrance du brevet: **18.01.1995**
(21) Numéro de dépôt: 91403178.6
(22) Date de dépôt: 25.11.1991
(51) Int. Cl.: B64G 1/64, F16B 21/16, F41F 5/00

(54) **Dispositif d'assujettissement temporaire d'un objet à un support à douille de retenue monobloc**
Vorrichtung zum zeitweisen Halten eines Objekts an einem Träger mit einer einteiligen Halterungshülse
Device for temporal holding of an object to a support with a monobloc holding socket

(30) Priorité: 30.11.1990 FR 9015049
(43) Date de publication de la demande: 03.06.1992
(73) Titulaire: AEROSPATIALE Société Nationale Industrielle, 75781 Paris Cédex 16 (FR)
(72) Inventeur: Spariat, Jacques, F-33160 Saint-Medard-en Jalles (FR); Aubret, Jean-Pierre, F-33200 Bordeaux (FR)
(74) Mandataire: Rinuy, Santarelli

(56) Documents cités:
- WO-A-82/02527
- US-A- 3 240 520
- US-A- 3 424 403
- US-A- 3 595 126
- US-A- 4 322 998
- US-A- 4 526 105

## Description

L'invention concerne l'assujettissement mécanique temporaire d'un objet à un support, la séparation rapide de cet objet vis à vis du support et son éjection avec une vitesse d'orientation précise, notamment pour son lancement sans guidage extérieur.

Elle se place avantageusement, mais de façon non exclusive, dans le domaine des engins spatiaux, tels que satellites, où interviennent des opérations de séparation/éjection ; l'invention peut toutefois s'appliquer également à divers engins terrestres, maritimes (navires de surface ou sous-marins) et aériens (aéronefs en tous genres) dans lesquels on établit une liaison temporaire que l'on souhaite supprimer à un quelconque moment donné, avec mise en mouvement prompte et précise de l'objet considéré (par exemple pour son lancement sans guidage extérieur).

C'est ainsi que l'invention peut notamment s'appliquer à la réalisation d'expériences scientifiques dans la haute atmosphère terrestre ou à l'exploration des planètes du système solaire à partir d'une sonde automatique. Elle peut par exemple servir à éjecter un réservoir contenant une substance chimique destinée à servir de traceur pour étudier les vents ou champs magnétiques : il est possible d'éjecter un tel réservoir à partir d'une plate-forme artificielle, telle qu'une fusée-sonde ou une sonde planétaire.

On connaît déjà divers mécanismes assurant un tel assujettissement temporaire suivi d'une séparation rapide avec une éjection plus ou moins forte, pour assurer au moins une bonne séparation relative entre l'objet et son support.

On peut ainsi citer notamment les documents US-4.554.905, WO-82/02527, US-3.887.150, US-2.888.294, US-3.196.745, US-3.597.919, US-4.002.120 ou US-4.187.759, ou encore le document EP-0.363.242 qui propose un dispositif pour la solidarisation provisoire de deux éléments l'un a l'autre, et leur séparation ultérieure, caractérisé en ce qu'il comporte un élément mâle lié à l'un des éléments et un élément femelle lié à l'autre élément, cet élément femelle comportant, dans un corps creux allongé selon un axe X-X, un manchon de retenue adapté à se rétracter radialement sur l'élément mâle ou à se dilater, un piston coulissant axialement pour la manoeuvre en rétraction/dilatation de ce manchon de retenue, et dans le piston, disposé le long de l'axe X-X, un doigt d'éjection qui lui est relié par un organe frangible, des moyens de commande sélective étant prévus, soit sur la seule commande en mouvement du piston, soit pour en outre casser l'organe frangible et faire coulisser axialement le doigt d'éjection axialement en saillie vis à vis de ce piston.

En pratique ces documents proposent d'utiliser une énergie de déverrouillage ou de séparation du type pression. Cette énergie peut être par exemple pneumatique, hydraulique ou pyrotechnique suivant les utilisations. Dans le cas particulièrement important d'une énergie pyrotechnique, on tire profit des effets pneumatiques produits par la combustion d'une substance explosive.

Une énergie de type pyrotechnique se retrouve également dans des dispositifs de séparation du type : boulons explosifs, découpeurs à charge ou systèmes pyrotechniques de déverrouillage par effacement d'une butée. Ils leur sont le plus souvent associés des pistons d'écartement.

Dans leur ensemble les divers documents précités ne se préoccupent guère du mouvement ultérieur de l'objet.

On connaît par ailleurs le document FR-2.616.852 qui vise un mécanisme permettant de commander l'écartement d'une pièce par rapport à son support avec lequel elle est initialement en contact, en maîtrisant parfaitement la vitesse et l'accélération d'éjection. Ce document enseigne pour cela comment appliquer à l'objet à éjecter une quantité d'énergie bien définie.

On connaît enfin d'après le document FR-2.550.756 un mécanisme spécifiquement destiné à l'éjection de sièges d'avion.

Malgré d'apparentes similitudes structurelles avec certains des documents précités, le document US-A-3.595.126 ne se préoccupe pas des fonctions envisagées ici. Au contraire, il se limite à envisager l'agrippement d'une tige d'amorçage puis l'application à celle-ci d'une traction.

Toutefois, il est apparu que ces mécanismes sont incapables à eux seuls de contrôler avec précision l'amplitude et l'orientation de la vitesse d'éjection, compte tenu notamment de la non prise en compte des tolérances de fabrication des composants du mécanisme d'éjection et des tolérances de montage de l'objet sur son support. C'est notamment le cas du document EP-0.363.242 précité qui vise principalement (mais non exclusivement) le simple désarrimage d'équipements divers tels que bras ou panneaux de véhicules artificiels.

Dans le cas du dispositif prévu par le document FR-2.616.852 qui prévoit un piston destiné à éjecter l'objet considéré par poussée sur son culot, on constate que la qualité de l'éjection dépend de façon sensible des paramètres suivants :
- rigidité des pièces en présence, notamment du piston d'éjection et de ses éléments de guidage,
- précision de fabrication et de montage de ces éléments de guidage,
- position du centre de gravité par rapport à l'axe de poussée, voire coaxialité de ce dernier et d'un axe principal d'inertie de la pièce ou objet à éjecter, surtout si, comme l'envisage l'invention, on souhaite induire une rotation de l'objet autour de l'axe principal,
- qualité de réalisation de la butée du piston contre la pièce à éjecter.

Des remarques similaires peuvent être faites à propos du document EP-0.363.242.

On constate en fait que la qualité de l'éjection est directement liée à la qualité géométrique de l'éjecteur et à la répartition initiale des jeux entre les diverses pièces mobiles en présence.

Les principales conséquences sont : mise au point délicate, dispersions malgré tout importantes, modélisation de l'éjecteur très difficile (prise en compte des rigidités, des jeux, des chocs...)
L'invention vise, pour pallier les inconvénients précités, à obtenir un mécanisme fiable et simple assurant la triple fonction de verrouillage, de déverrouillage instantané et d'éjection avec une vitesse contrôlée (au moins dans son orientation), en minimisant les influences des incertitudes inévitables dans la fabrication et le montage des pièces du mécanisme et de l'objet par rapport à ce mécanisme et au support ainsi qu'en minimisant les frottements et vibrations parasites, ces fonctions étant commandées par une source d'énergie de tout type connu approprié (extérieure au mécanisme visé par l'invention) adaptée à fournir une quantité précise d'énergie de pression.

La fonction de verrouillage consiste à réaliser l'assemblage et la tenue mécanique de l'objet par rapport à son support même en ambiance sévère (vibrations notamment mais aussi parfois vide spatial...). Elle doit répondre à une grande précision de positionnement relatif entre les deux pièces combinée avec une simplicité de liaison assurant une fiabilité de fonctionnement et de mise en oeuvre.

Le résultat à obtenir pour la fonction de déverrouillage est une désolidarisation instantanée des deux pièces sans perturber la qualité de l'éjection.

La fonction d'éjection rapide consiste à transmettre une accélération donnée à l'objet à éjecter par un effort de poussée engendrant uniquement, à la fin de l'éjection proprement dite (aux valeurs nominales), une vitesse longitudinale V_{L}, grâce en particulier à un bon contrôle des frottements entre l'objet et son support lors de l'application d'une poussée audit objet.

L'invention propose à cet effet un dispositif d'assujettissement temporaire d'un objet à un support, de libération et d'éjection de cet objet, comportant un corps femelle destiné à être fixé au support et un élément mâle lié a l'objet et adapté à pénétrer et ressortir du corps femelle selon un axe X-X, dans ce corps femelle étant prévus, des moyens de retenue munis de mors adaptés, en fonction de leur position axiale relative par rapport à une rampe tronconique de guidage évasée vers l'élément mâle, à se rétracter radialement sur une portion annulaire en saillie radiale de l'élément mâle ou à s'en écarter sous l'action de moyens de manoeuvre faisant partie du dispositif et comportant une tige de vérin de manoeuvre coaxiale à l'élément mâle, et des moyens d'éjection portés par cette tige dudit vérin adaptés à venir pousser l'élément mâle de l'objet selon ledit axe vers l'extérieur du corps, caractérisé en ce que :
- la rampe tronconique de guidage est solidaire du corps femelle,
- les moyens d'éjection sont solidaires de la tige du vérin de manoeuvre, comportant une portée transversale en appui, en phase de maintien, contre une portée transversale de l'élément mâle,
- les moyens de retenue comportent une douille mobile axialement dans le corps et comprenant un flasque transversal annulaire disposé entre deux décrochements transversaux de la tige et, solidaires de ce flasque à la périphérie de celui-ci, une pluralité de lames radialement flexibles, régulièrement décalées angulairement autour dudit axe, s'étendant vers l'élément mâle, et dont les extrémités libres portent lesdits mors, cette douille comportant en outre des moyens élastiques sollicitant ces mors radialement vers l'extérieur.

On appréciera que selon une disposition importante de l'invention, on met en oeuvre une douille en forme de tulipe, dont les pétales (les lames terminées par les mors) ont en phase de maintien une fonction de serrage et de centrage, avec la particularité que cette douille accompagne l'objet dans son mouvement initial (d'où une minimisation des perturbations transverses) pendant le mouvement d'éjection avant de libérer le maintien automatiquement.

L'invention se distingue notamment du document EP-0.363.242 par son faible nombre de pièces mobiles (en fait le grand nombre de pièces prévues selon ce document antérieur provenait notamment de l'objectif visé qui était de permettre d'effectuer, avant l'éjection, de façon automatique, un grand nombre de cycles de verrouillage et de déverrouillage, ce qui n'est pas recherché ici où on admet le recours à des manoeuvres manuelles), et par le fait que les moyens de retenue, qui sont en plusieurs pièces disjointes, n'ont guère de mouvement autre que radial à la faveur d'un recul de l'étui qui entoure ladite douille.

Selon des dispositions préférées de l'invention éventuellement combinées :
- la douille est montée coulissante entre les décrochements, un ressort de compression étant interposé axialement entre celui des décrochements qui est situé près de l'élément mâle et le flasque,
- celui des décrochements qui est près du fond du corps femelle est ajustable axialement,
- ce décrochement est porté par un écrou vissé sur une portion filetée de la tige du vérin,
- la rampe tronconique de guidage est un chanfrein bordant l'embouchure du corps femelle,
- la douille est mobile axialement entre une configuration ouverte dans laquelle les mors sont à l'extérieur du corps femelle et une configuration fermée dans laquelle les mors sont en appui sur la rampe par leurs faces radialement externes,
- l'élément mâle comporte une paroi tronconique s'évasant vers l'intérieur du corps femelle et en ce que les mors présentent des faces tronconiques internes et externes de conicités, par rapport aux lames, sensiblement égales aux conicités de la paroi tronconique de l'élément mâle et de la rampe de guidage, respectivement, la conicité α2 des faces externes étant supérieure à celle α1 des faces internes,
- les moyens élastiques sollicitant les mors radialement vers l'extérieur sont constitués par les lames flexibles elles-mêmes,
- les moyens élastiques sollicitant les mors radialement vers l'extérieur comportent des lames élastiques longeant les lames souples,
- les moyens d'éjection comportent une portée transversale ménagée au bout de la tige de vérin,
- la portée transversale comporte un téton de centrage en saillie par rapport à une surface plane, adapté à rentrer dans un trou borgne de l'élément mâle,
- les moyens d'éjection et celui des décrochements qui est le plus près de l'élément mâle est ménagé sur une pièce rapportée à la tige de vérin,
- la tige de vérin est assujettie au corps femelle par une goupille frangible,
- celui des décrochements le plus au fond du corps femelle étant ajustable axialement dans ce corps femelle est ménagée au moins une fenêtre d'accès.

Des objets, caractéristiques et avantages de l'invention ressortent de la description qui suit, donnée à titre d'exemple non limitatif, en regard des dessins annexés sur lesquels :
- la figure 1 est un schéma de principe en perspective avec arrachement partiel d'un système d'assemblage mécanique d'un objet à un support conforme à l'invention ;
- la figure 2 est une vue détaillée en coupe axiale d'un système conforme au schéma de principe de la figure 1 ;
- la figure 3 est une vue en perspective de la douille en forme de tulipe, prise isolément ;
- la figure 4 est une vue de détail montrant une variante de réalisation de chaque pétale de la douille ;
- la figure 5 est une vue analogue à la figure 2 montrant la phase de verrouillage d'une portion mâle de l'objet ;
- la figure 6 est une vue analogue montrant la phase d'éjection ; et
- la figure 7 est une variante de la figure 2.

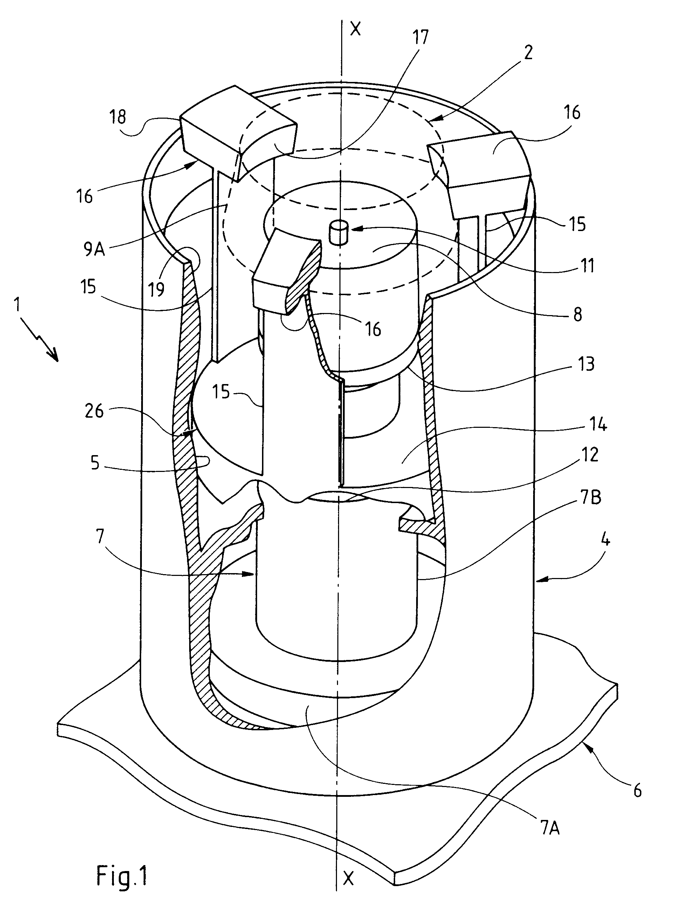

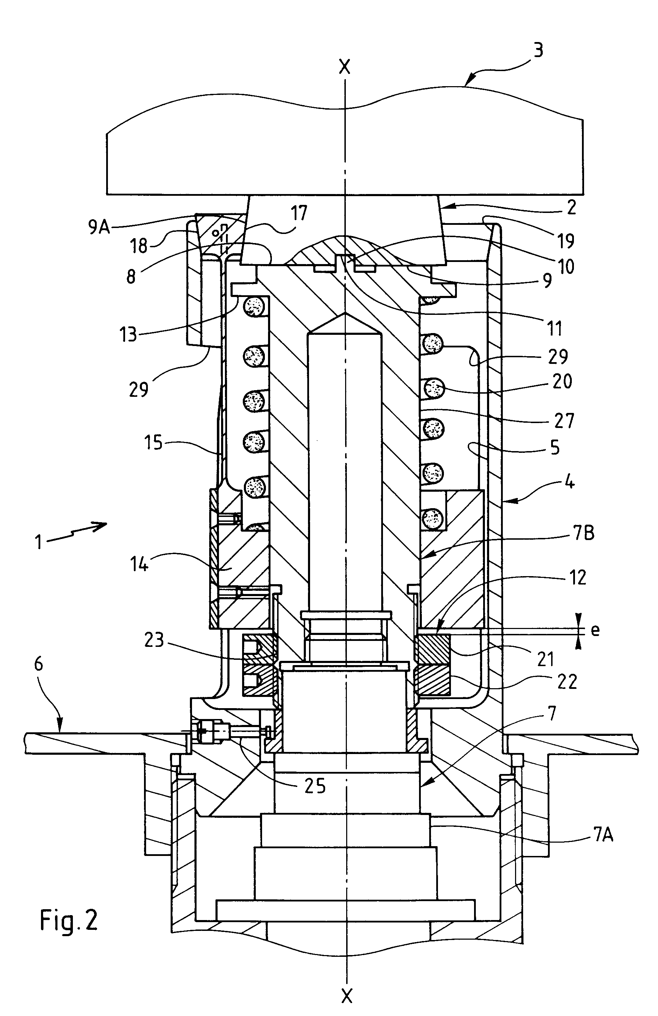

Ainsi que cela ressort des figures 1 et 2, un système d'assujettissement temporaire conforme à l'invention, désigné par la référence 1 dans son ensemble, comporte un élément mâle 2 représenté en tiretés à la figure 1, destiné à être fixé à un objet 3 uniquement représenté en partie aux figures 2, 5, 6 et 7, et un corps 4 comportant un logement 5 dans lequel peut pénétrer l'élément mâle selon une direction de référence X-X et qui est destiné à être fixé, par tous moyens connus appropriés, à un support schématisé en 6.

Dans ce logement, est monté un vérin 7 dont le corps 7A est solidaire du corps 4 et dont la tige 7B est coaxiale à la direction X-X et à l'élément mâle 2. A son extrémité libre, la tige 7B présente une portée transversale 8 destinée à venir axialement en appui contre une portée transversale 9 de forme complémentaire ménagée à la base de l'élément mâle.

Cette partie 8 est ici une surface plane vis-à-vis de laquelle un téton de centrage 10, coaxial à la tige, vient en saillie. La portée 9 est une surface plane au centre de laquelle est aménagé un trou borgne 11 adapté à recevoir le téton de centrage.

La portée 9 de l'élément mâle 2 se raccorde au reste de l'objet 3 par une paroi tronconique effilée 9A vers l'intérieur de cet objet grâce à quoi cet élément mâle comporte, le long de la portée, une couronne annulaire en saillie radiale.

La tige de vérin comporte deux décrochements 12 et 13 se faisant axialement face.

Autour de cette tige est monté coulissant, entre ces décrochements, un flasque transversal 14 à la périphérie duquel se raccordent des lames 15 radialement flexibles et s'étendant axialement vers l'objet et dont les extrémités 16 sont élargies radialement en sorte de former des mors présentant des portées tronconiques intérieures 17 et extérieures 18, inclinées par rapport à l'axe, et convergeant vers l'intérieur du support.

Les parties tronconiques intérieures 17 sont adaptées à s'appliquer contre la paroi tronconique 9A de l'élément mâle tandis que les portées tronconiques extérieures sont adaptées à s'appliquer contre un chanfrein tronconique 19 bordant l'embouchure du logement 5 du corps 4.

Un ressort 20 (non représenté à la figure 1) est comprimé axialement entre le décrochement 13 et le flasque 14 en sorte de presser élastiquement ce dernier vers le décrochement 12, donc à l'opposé de l'objet.

Le décrochement 12 est avantageusement ajustable axialement, constitué à la figure 2 d'un écrou de retenue 21 en appui sur un contre-écrou 22 engagé sur une portion filetée 23 de la tige.

Une goupille frangible 25 (voir figure 2) est disposée radialement en sorte de maintenir en position la tige par rapport au corps 4.

Le flasque 14 et les lames 15 font partie d'une même pièce 26 constituant une douille entourant la tige 7B. Cette douille a la forme d'une tulipe dont les lames 15 constituent des pétales (ici au nombre de trois et décalés angulairement autour de l'axe d'un angle de 120°).

Pour faciliter le montage de la tulipe, la tige 7B est en deux parties, à savoir la tige de vérin proprement dite et un manchon 27 fixé par vissage.

Dans le corps 4 sont avantageusement ménagées des fenêtres 29 permettant l'accès notamment des écrous 21 et 22.

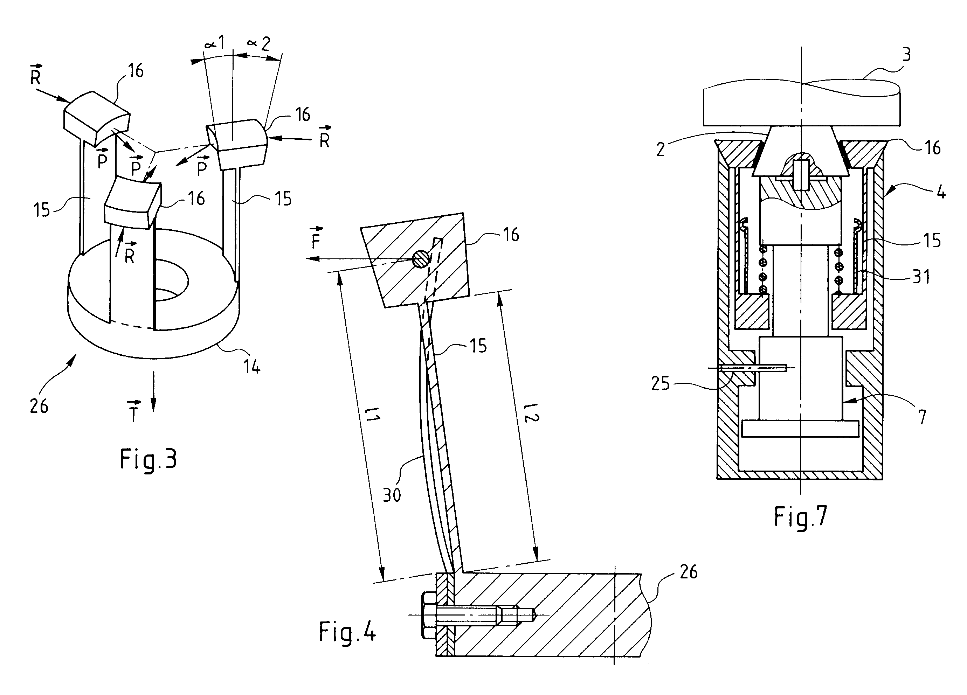

Le détail de la tulipe 26 est donné aux figures 3 et 4.

L'intérêt de sa structure monobloc est le bon positionnement des surfaces tronconiques 17 et 18, ce qui est nécessaire pour la qualité du centrage de l'élément mâle ainsi que la bonne répartition des efforts de bridage sur les trois branches 15.

De manière préférée, les caractéristiques des angles de conitité α1 et α2 :
(1) α2 est supérieur à l'angle de frottement du corps sur tulipe
(2) α1 est supérieur à l'angle de frottement de l'objet/tulipe
(3) α2 > α1
Les conditions (1) et (2) évitent le risque de coincement de dispositif et la condition (3) assure la priorité dans le temps du dégagement de la tulipe vis à vis du corps sur le dégagement de la tulipe vis à vis de l'élément mâle.

Les angles α1 et α2 indiqués ci-dessus sont les conicités des faces tronconiques 17 et 18 par rapport à l'axe longitudinal de la lame 15 associée.

Du fait que, ainsi que cela ressort de la configuration de maintien de la figure 2, les faces externes 18 des mors 16 sont en appui sur le chanfrein 19 tandis que les faces internes sont en appui sur la paroi tronconique de l'élément mâle, l'effort de compression T appliqué par le ressort vers le fond du logement 5 induit par effet de coin l'apparition sur les mords d'efforts R dirigés vers l'axe qui induisent à leur tour, sur l'élément mâle, du fait de la conicité α1, des efforts P dirigés vers l'axe et vers le bas, assurant un bridage efficace de cet élément mâle contre la portée 8.

On appréciera que dans le cas représenté à la figure 2, la conicité α2 des faces externes se traduit par le fait que l'effet de coin généré par la rampe 19 permet un bon maintien grâce au ressort 20 tout en laissant subsister un jeu e entre le flasque et la portée interne 12.

Les lames flexibles 15 sont sollicitées élastiquement radialement vers l'extérieur, soit de par leur élasticité propre (figure 2), soit de par la présence de lames de ressort additionnelles 30 (voir figure 4) ou 31 (voir figure 7).

Dans le cas par exemple de la figure 4, la tulipe est usinée en position fermée (position nominale de serrage) et ce sont les lames ressort 30 qui provoquent son ouverture (effort F) en phase de montage ou en phase d'éjection.

Les dimensions de l1 et l2 sont définies par les formules classiques de calcul en flexion à partir des caractéristiques des matériaux choisis et de la configuration d'équilibre en flexion désirée ("tulipe ouverte").

En position ouverte, il y a donc un équilibre entre l'effort F que fournit le ressort dans cette position et l'effort résistant des pétales préusinés (effort de flexion). On a donc ainsi un équilibre entre deux lames 15 et 30 travaillant en flexion.

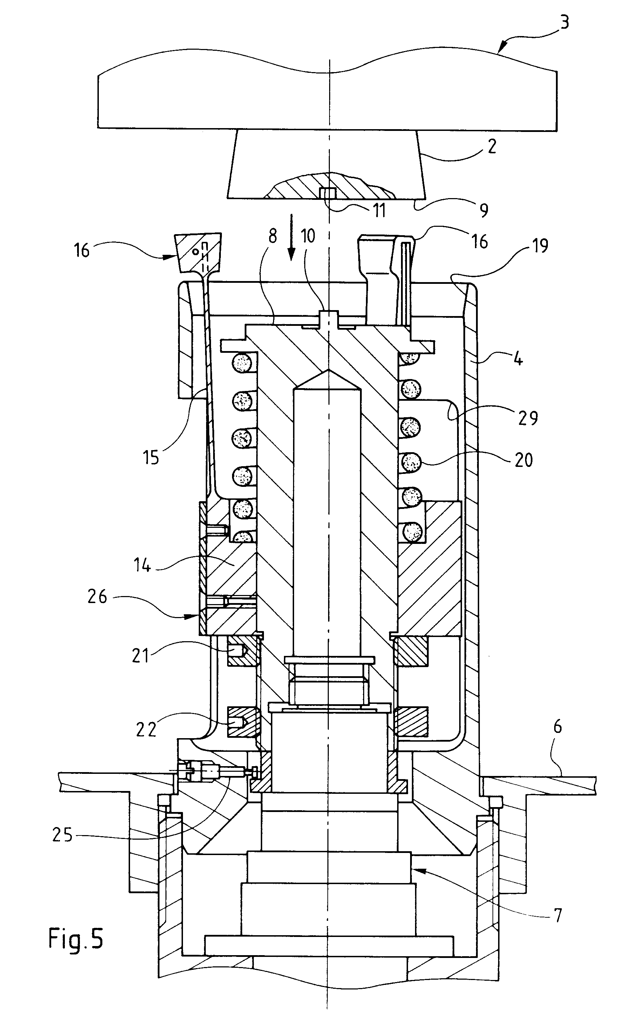

La procédure de mise en place de la charge utile qui permet de passer de la configuration montage à la configuration maintien (voir la figure 5), est la suivante :
a) on s'assure que l'ensemble tulipe 26 est dans la configuration ouverture (écrou d'ouverture 21 vissé en butée vers le haut en comprimant le ressort 20),
b) on présente l'objet sur l'interface 8 + 10 de positionnement,
c) on désserre l'écrou d'ouverture 21 (la tulipe descend et les pétales enserrent l'objet),
d) on règle la position de l'écrou d'ouverture de façon à obtenir un jeu e de 0,5 ± 0,1 entre l'écrou 21 et la tulipe,
e) on bloque le contre-écrou 22 sur l'écrou d'ouverture.

Le positionnement et le maintien sont réalisés :
- d'une part, par le téton de centrage 10 et la portée plane 8 directement reliés au vérin pyrotechnique 7. Ceci donne une butée longitudinale et un point sur l'axe de l'objet ( charge utile ;
- d'autre part, par la tulipe qui fournit un deuxième centrage et un bridage à composante axiale et radiale. Le bridage est obtenu par effet de coin du fait des portées coniques (voir ci-dessus), l'effort nécessaire à ce bridage étant fourni par le ressort de compression. L'intérêt de ce ressort par rapport à un autre système de mise en tension (vis/écrou par exemple) est la maîtrise du module de l'effort de bridage au moment de la mise en place de l'objet et dans le temps (rattrapage des relaxations).

En effet avec un système vis/écrou on exerce des couples de serrage qui engendrent des efforts de tension avec de fortes dispersions ; donc on ne maîtrise pas finement l'effort de pré-tension que l'on crée. Tandis qu'avec un ressort, on engendre un effort déterminé et lorsqu'il y a du matage de contact lors du montage ou dans le temps, le ressort permet de rattraper le jeu en fournissant un effort stable. On comprend que dans notre cas, l'objet axi-symétrique n'est pas positionné en rotation. Un deuxième téton sur la portée plane par exemple peut compléter ce positionnement.

L'ensemble mobile est maintenu en position vis à vis du corps par la goupille à cisailler 25.

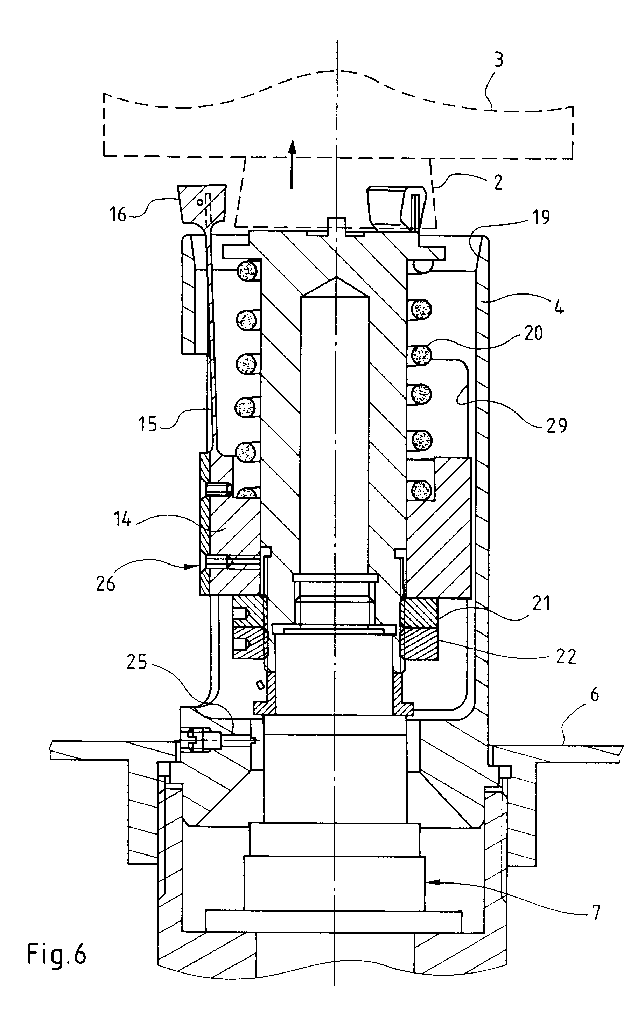

La figure 6 présente la phase d'éjection.

La portée plane 8 entre l'objet et l'éjecteur constitue l'interface de mise en mouvement. Lors du déploiement du vérin, la goupille de retenue se casse, l'ensemble mobile (vérin + tulipe) pousse l'objet. La tulipe dans ce mouvement se dégage rapidement de ses points d'appuis sur le corps (d'où ouverture de la tulipe). L'objet ainsi libéré part en phase balistique à la fin de la poussée.

Pour des raisons de commodité de montage, le corps 4 est avantageusement une pièce cylindrique raccordée, par une bague filetée, a un logement pour le corps et la chambre de vérin.

Pour induire à l'objet une éventuelle vitesse initiale de rotation autour de son axe, on peut prévoir un guidage hélicoïdal du vérin 7 et des moyens d'attelage en rotation du vérin à l'objet.

## Revendications

1. Dispositif d'assujettissement temporaire d'un objet (3) à un support (6), de libération et d'éjection de cet objet, comportant un corps femelle (4) destiné à être fixé au support et un élément mâle (2) lié à l'objet et adapté à pénétrer et ressortir du corps femelle selon un axe X-X, dans ce corps femelle étant prévus, des moyens de retenue munis de mors (16) adaptés, en fonction de leur position axiale relative par rapport à une rampe tronconique de guidage (19) évasée vers l'élément mâle, à se rétracter radialement sur une portion annulaire en saillie radiale de l'élément mâle ou à s'en écarter sous l'action de moyens de manoeuvre faisant partie du dispositif et comportant une tige de vérin de manoeuvre (7) coaxiale à l'élément mâle, et des moyens d'éjection (8, 10) portés par cette tige (7A) dudit vérin adaptés à venir pousser l'élément mâle de l'objet selon ledit axe vers l'extérieur du corps, caractérisé en ce que :
- la rampe tronconique de guidage (19) est solidaire du corps femelle,
- les moyens d'éjection (8, 10) sont solidaires de la tige (7B) du vérin de manoeuvre, comportant une portée transversale (8) en appui, en phase de maintien, contre une portée transversale (9) de l'élément mâle,
- les moyens de retenue comportent une douille (26) mobile axialement dans le corps et comprenant un flasque transversal (14) annulaire disposé entre deux décrochements transversaux (12, 13) de la tige et, solidaires de ce flasque à la périphérie de celui-ci, une pluralité de lames radialement flexibles (15), régulièrement décalées angulairement autour dudit axe, s'étendant vers l'élément mâle, et dont les extrémités libres portent lesdits mors, cette douille comportant en outre des moyens élastiques (15, 30, 31) sollicitant ces mors radialement vers l'extérieur.

2. Dispositif selon la revendication 1, caractérisé en ce que la douille (26) est montée coulissante entre les décrochements, un ressort de compression (20) étant interposé axialement entre celui (13) des décrochements qui est situé près de l'élément mâle et le flasque (14).

3. Dispositif selon la revendication 1 ou 2, caractérisé en ce que celui (12) des décrochements qui est près du fond du corps femelle est ajustable axialement.

4. Dispositif selon la revendication 3, caractérisé en ce que ce décrochement (12) est porté par un écrou (21) vissé sur une portion filetée (23) de la tige du vérin.

5. Dispositif selon l'une quelconque des revendications 1 à 4, caractérisé en ce que la rampe tronconique de guidage (19) est un chanfrein bordant l'embouchure du corps femelle.

6. Dispositif selon l'une quelconque des revendications 1 à 5, caractérisé en ce que la douille est mobile axialement entre une configuration ouverte dans laquelle les mors sont à l'extérieur du corps femelle et une configuration fermée dans laquelle les mors sont en appui sur la rampe par leurs faces radialement externes.

7. Dispositif selon la revendication 6, caractérisé en ce que l'élément mâle comporte une paroi tronconique s'évasant vers l'intérieur du corps femelle et en ce que les mors présentent des faces tronconiques internes (17) et externes (18), de conicités, par rapport aux lames (15), sensiblement égales aux conicités de la paroi tronconique de l'élément mâle et de la rampe de guidage, respectivement, la conicité α2 des faces externes (18) étant supérieure à celle α1 des faces internes (17).

8. Dispositif selon l'une quelconque des revendications 1 à 8, caractérisé en ce que les moyens élastiques sollicitant les mors radialement vers l'extérieur sont constitués par les lames flexibles (15) elles-mêmes.

9. Dispositif selon l'une quelconque des revendications 1 à 7, caractérisé en ce que les moyens élastiques sollicitant les mors radialement vers l'extérieur comportent des lames élastiques (30, 31) longeant les lames souples (15).

10. Dispositif selon l'une quelconque des revendications 1 à 9, caractérisé en ce que les moyens d'éjection comportent une portée transversale ménagée au bout de la tige de vérin.

11. Dispositif selon la revendication 10, caractérisé en ce que la portée transversale (8) comporte un téton de centrage (10) en saillie par rapport à une surface plane, adapté à rentrer dans un trou borgne (11) de l'élément mâle.

12. Dispositif selon l'une quelconque des revendications 1 à 11, caractérisé en ce que les moyens d'éjection et celui (13) des décrochements qui est le plus près de l'élément mâle est ménagé sur une pièce (27) rapportée à la tige de vérin.

13. Dispositif selon l'une quelconque des revendications 1 à 12, caractérisé en ce que la tige de vérin est assujettie au corps femelle par une goupille frangible (25).

14. Dispositif selon l'une quelconque des revendications 1 à 13, caractérisé en ce que celui (12) des décrochements le plus au fond du corps femelle étant ajustable axialement dans ce corps femelle est ménagée au moins une fenêtre d'accès (29).

## Claims

1. Device for temporarily attaching an object (3) to a support (6), releasing and ejecting said object, comprising a female body (4) adapted to be fixed to the support and a male member (2) joined to the object and adapted to enter and leave the female body along an X-X axis, there being provided in said female body retaining means provided with jaws (16) adapted, according to their axial position relative to a frustoconical guide ramp surface (19) widening towards the male member, to retract radially onto an annular radially projecting portion of the male member or to move away therefrom due to the action of operating means forming part of the device and including an operating actuator rod (7) coaxial with the male member, and ejector means (8, 10) carried by said rod (7A) of said actuator adapted to push the male member of the object along said axis towards the outside of the body, characterised in that:
- the frustoconical guide ramps surface (19) is attached to the female body,
- the ejector means (8, 10) are attached to the rod (7B) of the operating actuator, including a transverse bearing surface (8) bearing during the holding phase against a transverse bearing surface (9) of the male member,
- the retaining means include a bush (26) mobile axially in the body and comprising an annular transverse flange (14) between two transverse steps (12, 13) of the rod and, attached to said flange at the periphery thereof, a plurality of radially flexible blades (15) equi-angularly spaced around said axis and extending towards the male member, and the free ends of which carry said jaws, said bush further including spring means (15, 30, 31) urging said jaws radially outwards.

2. Device according to claim 1 characterised in that the bush (26) is slidably mounted between the steps, a compression spring (20) being disposed axially between the step (13) near the male member and the flange (14).

3. Device according to claim 1 or claim 2 characterised in that the step (12) near the back of the female body is adjustable axially.

4. Device according to claim 3 characterised in that said step (12) is carried by a nut (21) screwed onto a screwthreaded portion (23) of the actuator rod.

5. Device according to any one of claims 1 to 4 characterised in that the frustoconical guide ramp surface (19) is a chamfer around the mouth of the female body.

6. Device according to any one of claims 1 to 5 characterised in that the bush is mobile axially between an open configuration in which the jaws are outside the female body and a closed configuration in which the radially external sides of the jaws bear on the ramp surface.

7. Device according to claim 6 characterised in that the male member includes a frustoconical wall widening towards the inside of the female body and in that the jaws have frustoconical inside and outside surfaces (17, 18) whose cone angle relative to the blades (15) is substantially equal to the cone angle of the frustoconical wall of the male member and of the guide ramp surface, respectively, the cone angle α2 of the outside surfaces (18) being greater than that α1 of the inside surfaces (17).

8. Device according to any one of claims 1 to 8 characterised in that the spring means urging the jaws radially outwards are constituted by inherently flexible blades (15).

9. Device according to any one of claims 1 to 7 characterised in that the spring means urging the jaws readily outwards comprise leaf springs (30, 31) running along the flexible blades (15).

10. Device according to any one of claims 1 to 9 characterised in that the ejector means include a transverse bearing surface at the end of the actuator rod.

11. Device according to claim 10 characterised in that the transverse bearing surface (8) has a centering nipple (10) projecting relative to a plane surface and adapted to enter a blind hole (11) in the male member.

12. Device according to any one of claims 1 to 11 characterised in that the ejector means and the step (13) nearest the male member are formed on a part (27) attached to the actuator rod.

13. Device according to any one of claims 1 to 12 characterised in that the actuator rod is attached to the female body by a fragile pin (25).

14. Device according to any one of claims 1 to 13 characterised in that the step (12) nearest the back of the female member is adjustable axially and at least one access window (29) is formed in said female body.

## Patentansprüche

1. Vorrichtung zur zeitlich begrenzten Befestigung eines Objekts (3) an einem Träger (6) zur Freigabe und zur Ausstoßung dieses Objekts, umfassend einen aufnehmenden Körper (4), der dazu bestimmt ist, an dem Träger befestigt zu werden, und ein einführbares Element (2), das mit dem Objekt verbunden ist und dafür ausgelegt ist, in den aufnehmenden Körper in einer Achse (X-X) einzutreten und aus diesem herauszutreten, wobei in dem aufnehmenden Körper mit Backen (16) versehene Rückhaltemittel vorgesehen sind, die dafür ausgelegt sind, sich in Abhängigkeit von ihrer relativen axialen Stellung bezüglich einer auf das einführbare Element zu ausgeweiteten, kegelstumpfförmigen Führungsrampe (19) auf einem radial hervorstehenden ringförmigen Abschnitt des einführbaren Elements radial zusammenzuziehen oder sich unter der Wirkung von Betätigungsmitteln von diesem zu entfernen, die Teil der Vorrichtung bilden und eine zum einführbaren Element koaxiale Betätigungszylinderstange (7) und Ausstoßmittel (8, 10) besitzen, die von dieser Stange (7a) dieses Zylinders getragen sind und dafür ausgelegt sind, das einführbare Element des Objekts in dieser Achse aus dem Körper herauszudrücken, dadurch gekennzeichnet, daß
- die kegelstumpfförmige Führungsrampe (19) mit dem aufnehmenden Körper fest verbunden ist,
- die Ausstoßmittel (8, 10) mit der Stange (7B) des Betätigungszylinders fest verbunden sind und eine Querauflagefläche (8) umfassen, die in der Haltephase an einer Querauflagefläche (9) des einführbaren Elements in Anlage ist,
- die Rückhaltemittel eine Buchse (26), die axial in dem Körper beweglich ist und eine ringförmige Querscheibe (14) besitzt, die zwischen zwei Querschultern (12, 13) der Stange angeordnet ist, und, mit dieser Scheibe an ihrem Umfang fest verbunden, eine Mehrzahl von radial flexiblen Lamellen (15) aufweisen, die winkelmäßig um diese Achse regelmäßig versetzt sind und sich auf das einführbare Element zu erstrecken und deren freie Enden die Backen tragen, wobei diese Buchse außerdem elastische Mittel (15, 30, 31) besitzt, die diese Backen radial nach außen beaufschlagen.

2. Vorrichtung nach Anspruch 1, dadurch gekennzeichnet, daß die Buchse (26) zwischen den Schultern verschiebbar montiert ist, wobei eine Kompressionsfeder (20) axial zwischen diejenige (13) der Schultern, die bei dem einführbaren Element gelegen ist, und die Scheibe (14) eingesetzt ist.

3. Vorrichtung nach Anspruch 1 oder 2, dadurch gekennzeichnet, daß diejenige (12) der Schultern, die bei dem Boden des aufnehmenden Körpers ist, axial einstellbar ist.

4. Vorrichtung nach Anspruch 3, dadurch gekennzeichnet, daß diese Schulter (12) von einer Mutter (21) getragen ist, die auf einen Gewindeabschnitt (23) der Stange des Zylinders aufgeschraubt ist.

5. Vorrichtung nach einem der Ansprüche 1 bis 4, dadurch gekennzeichnet, daß die kegelstumpfförmige Führungsrampe (19) eine die Mündung des aufnehmenden Körpers säumende Abschrägung ist.

6. Vorrichtung nach einem der Ansprüche 1 bis 5, dadurch gekennzeichnet, daß die Buchse axial zwischen einer offenen Konfiguration, in der die Backen außerhalb des aufnehmenden Körpers sind, und einer geschlossenen Konfiguration beweglich ist, in der die Backen mit ihren radial äußeren Flächen an der Rampe anliegen.

7. Vorrichtung nach Anspruch 6, dadurch gekennzeichnet, daß das einführbare Element eine kegelstumpfförmige Wand besitzt, die sich auf das Innere des aufnehmenden Körpers zu ausweitet, und daß die Backen innere (17) und äußere (18) kegelstumpfförmige Flächen besitzen, deren Konizitäten bezüglich der Lamellen (15) im wesentlichen gleich den Konizitäten der kegelstumpfförmigen Wand des einführbaren Elements bzw. der Führungsrampe sind, wobei die Konizität α2 der Außenflächen (18) größer als die Konizität α1 der Innenflächen (17) ist.

8. Vorrichtung nach einem der Ansprüche 1 bis 8, dadurch gekennzeichnet, daß die elastischen Mittel, die die Backen radial nach außen beaufschlagen, aus ihrerseits flexiblen Lamellen (15) bestehen.

9. Vorrichtung nach einem der Ansprüche 1 bis 7, dadurch gekennzeichnet, daß die elastischen Mittel, die die Backen radial nach außen beaufschlagen, elastische Lamellen (30, 31) umfassen, die sich längs der biegsamen Lamellen (15) erstrecken ken.

10. Vorrichtung nach einem der Ansprüche 1 bis 9, dadurch gekennzeichnet, daß die Ausstoßmittel eine Querauflagefläche umfassen, die am Ende der Zylinderstange vorgesehen ist.

11. Vorrichtung nach Anspruch 10, dadurch gekennzeichnet, daß die Querauflagefläche (8) einen bezüglich einer ebenen Fläche hervorstehenden Zentrierstift (10) besitzt, der dafür ausgelegt ist, in ein Sackloch (11) des einführbaren Elements einzutreten.

12. Vorrichtung nach einem der Ansprüche 1 bis 11, dadurch gekennzeichnet, daß die Ausstoßmittel und diejenige (13) der Schultern, die dem einführbaren Element an nächsten ist, an einem an der Zylinderstange angebrachten Teil (27) vorgesehen sind.

13. Vorrichtung nach einem der Ansprüche 1 bis 12, dadurch gekennzeichnet, daß die Zylinderstange an dem aufnehmenden Körper durch einen durchbrechbaren Stift (25) befestigt ist.

14. Vorrichtung nach einem der Ansprüche 1 bis 13, dadurch gekennzeichnet, daß diejenige (12) der Schultern, die dem Boden des aufnehmenden Körpers am nächsten ist, axial einstellbar ist und daß in diesem aufnehmenden Körper wenigstens ein Zugangsfenster (29) vorgesehen ist.
